Europäisches Patentamt

(19) European Patent Office

Office européen des brevets

(11) Publication number: **0 157 767**
**B1**

(12) **EUROPEAN PATENT SPECIFICATION**

(45) Date of publication of patent specification: **23.12.87**

(21) Application number: **83903345.3**

(22) Date of filing: **29.09.83**

(86) International application number:
**PCT/US83/01519**

(87) International publication number:
**WO 85/01497 11.04.85 Gazette 85/09**

(51) Int. Cl.⁴: **C 03 B 5/027, C 03 B 5/20**

(54) ·**ELECTRICAL MELTING OF SOLIDIFIED GLASS IN MELTING UNITS.**

(43) Date of publication of application:
**16.10.85 Bulletin 85/42**

(45) Publication of the grant of the patent:
**23.12.87 Bulletin 87/52**

(84) Designated Contracting States:
**AT DE FR GB NL SE**

(56) References cited:
**US-A-1 944 855**
**US-A-2 186 718**
**US-A-2 902 524**
**US-A-3 160 692**
**US-A-3 198 619**
**US-A-3 842 180**
**US-A-3 997 710**

(73) Proprietor: **OWENS-CORNING FIBERGLAS**
**CORPORATION**
**Fiberglas Tower 26**
**Toledo, Ohio 43659 (US)**

(72) Inventor: **FARRAR, Gordon, Alan**
**511 Randy Drive**
**Newark, OH 43055 (US)**
Inventor: **FRIEMOTH, Melvin Richard**
**deceased**
**US (US)**

(74) Representative: **Chauchard, Robert et al**
**c/o Cabinet Malémont**
**42, avenue du Président Wilson**
**F-75116 Paris (FR)**

Courier Press, Leamington Spa, England.

EP 0 157 767 B1

## Description

### Technical Field

This invention is a method and electrode arrangement for electrically melting solidified glass in difficult to reach regions of a glass melting furnace not readily accessible with fossil fuel heating means and more particularly to electrical heating of solidified glass in regions such as a submerged outlet throat between a furnace melter section and the riser through which the glass is supplied in production.

During periods of curtailment of furnace operations in the production of glass, the practice has been to maintain the upper region of the melter section and the outlet throat at a low temperature by supplying a low level of heat thereto. Upon decision to restart the furnace, the start-up time can thus be minimized as well as the thermal shock and mechanical stress of startup of the furnace.

The cost of energy for maintaining furnaces in a heated condition over such an extended period, for example, in the order of months, however, is an extremely costly non-productive burden. To eliminate such high cost, two alternate approaches are possible, one being to drain the furnace completely upon shut-down, and the second is to allow the glass to completely solidify in the furnace.

When a glass melting furnace is completely drained during down times, restart procedures correspond much to those of start-up of a new furnace. Restart of a completely drained furnace, however, has the disadvantage that spalling of refractory and cracking under thermal stress can result in areas of previous wear of the furnace.

Restart of the furnace with solidified glass of the previous melt therein is often found more desirable in that it reduces the thermal shock difficulties. Where a submerged throat exists in the outlet end of the furnace, however, remelting of the solid glass in the throat is extremely difficult to accomplish because of its inaccessability to external sources of heat in addition to remoteness of heat of the melt.

### Background Art

During periods of curtailment or reduction of usage of glass melting furnaces, it has been the practice to maintain the glass in a submerged throat in a molten state by use of electrodes as disclosed in Maddux, U.S. Patent 3,997,710. This becomes extremely uneconomical as the length of out-of-service time increases. Methods have been developed to remelt glass in a melter section by combustion heating means as disclosed in Froberg et al, U.S. Patent 3,842,180. More precisely, U.S. Patent 3,842,180 discloses a method and apparatus for remelting solidified glass in a furnace. The glass is melted by gas burners to provide a conductive path between electrodes. In the alternative, a low resistivity material, such as sodium silicate, is placed between the electrodes; the electrodes are interconnected to a high voltage source; and the electrodes allowed to arc between themselves to produce localized heating. A method relied on combustion heating, will not work in areas which are inaccessible to fossil fuel combustion such as a submerged throat. Similar methods of remelting glass in a forehearth by means of combustion gas have been disclosed in U.S. Patent 3,198,619 which describes a forehearth of a glass furnace which uses electrodes 18 to heat the molten glass. Removable covers are provided on the forehearth to heat the glass with a gas burner to prevent the glass from solidifying in case of electrical failure.

A non-combustion gas means for melting glass in an inaccessible region is through Radio Frequency heating such as disclosed by Ferguson, U.S. Patent 2,186,718. The physical size of the submerged throat makes this method impractical.

Accordingly, it is a general object of the present invention to provide a method and means for melting solidified glass in the difficult to reach regions of a glass melting furnace.

More particularly, it is an object of the present invention to provide a method and means for electrically melting solidified glass in a submerged throat between the melter and the riser sections of a glass melting furnace.

### Disclosure of the Invention

The present invention provides a method of melting solidified glass in a submerged throat of a glass melting furnace comprising providing at least a first electrode in the melter chamber supply slot; providing a second electrode in the covered submerged throat and subsequent electrodes adjacent said second electrode along the length of the covered submerged throat, thus forming a series of electrodes, the spacing of the electrodes in the series being such that when power is applied between any two adjacent electrodes when molten material exists about one of the electrodes a Joule effect conductive path is provided upon power supply to the electrode in the series adjacent to the electrode about which molten material exists heating glass about said first electrode to a conductive condition around said first electrode and supplying electric energy between said first electrode and said second electrode to establish a Joule effect conductive path therebetween to more fully melt the glass therebetween and then supplying electric energy between said first electrode and sequentially to any subsequent electrode along said submerged throat to sequentially thaw the solidified glass by conduction of heat from the region between the first electrode and second electrode and sequentially any subsequent electrode until the glass around the next subsequent electrodes becomes conductive and electric power for Joule effect heating can be applied to the next subsequent electrodes in the submerged throat until all of the glass in the submerged throat is molten.

The present invention provides also an electrode arrangement for melting solidified glass in a submerged outlet throat of a glass melting furnace comprising spaced apart electrodes including a first electrode at the entry to the throat, a second electrode in the covered submerged throat, one or more subsequent electrodes adjacent said second electrode, and a last electrode at the exit of the throat, means for melting glass around said first electrode to provide molten glass between said first electrode and said second electrode, electric energy means for establishing a Joule effect current therebetween for melting glass about said second electrode to provide molten glass for establishment of a conductive path between said second electrode and its next adjacent electrode, and means for applying electric energy between said first electrode and each of said subsequent electrodes and last electrode sequentially until said means supply electric power between said first electrode and said last electrode, to complete a molten glass conductive path through the submerged throat between said first electrode and said last electrode.

Solidified glass in a submerged throat of a glass melting furnace is melted according to the invention by the step by step thawing or melting of glass between each adjacent pair of a series of electrodes spaced apart from each other in a path extending from a position just before the entry to the throat to a position at the riser. The spacing of the electrodes in the series is such that when power is applied between any two adjacent electrodes when molten material exists about one of the electrodes, a Joule effect conductive path is provided to the next adjacent electrode. Under such condition, glass between the two electrodes can be melted by supply of electric energy between the two adjacent electrodes. Molten glass is then, in turn, provided about the second electrode to permit Joule effect heating of glass between it and the next succeeding electrode of the series as well as between such next electrode and the first electrode. Thus, solidified glass between each successive adjacent pair of electrodes can be melted step-by-step to provide a continuous molten path through the throat to the riser whereupon the glass can be supplied for production and conventional heating of the glass can be relied upon.

A feature of the invention is that it allows curtailment of glass production by complete shutdown of a furnace without requiring full drainage of the glass or requiring that it be maintained hot during the shutdown period.

Another feature of the invention is that it maximizes production for the energy input regardless of fluctuating demands for output.

### Brief Description of the Drawings

FIGURE 1 is a broken away plan view illustrating an electric glass melting furnace with a submerged throat and riser in its exit end leading to a forehearth from which molten glass is supplied for production of products such as glass fibers.

FIGURE 2 is a cross sectional view taken on line 2—2 of the throat portion of the electric furnace represented in FIGURE 1.

FIGURE 3 illustrates in perspective the submerged throat represented in cross section in FIGURE 2 showing the electrodes inserted in the submerged channel for melting solidified glass therein.

### Best Mode for Carrying Out the Invention

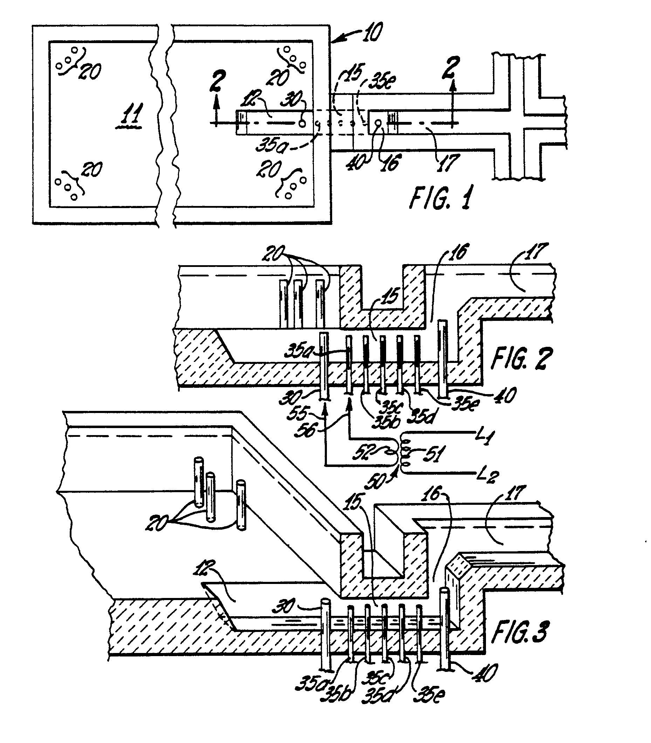

Referring to the drawings in greater detail, FIGURE 1 illustrates a plan view of an electric furnace 10 having a melting region 11 heated by electric power supplied by way of electrodes 20 located in the four corners of the furnace. The furnace here illustrated is of the cold top type in which the batch is supplied to the top of the molten mass within the furnace, such batch being melted at its interface with the underlying molten pool of glass. As the molten glass is heated by the power supplied at the electrodes 20, it is withdrawn for use in production of products through a recessed channel or slot 12 located at the mid-region of one wall of the furnace. Thus glass is flowed through an outlet throat 15 to a riser 16 connected to the furnace forehearth 17 for the supply of glass to units for production of products such as glass fibers.

In supplying glass from the furnace through a submerged throat, as illustrated, it is conventional to provide supplementary heat by way of electrodes 30 and 40 located in the slot 12 leading to the throat 15 and at the exit from the throat in the region of the riser 16, respectively. Thus, the glass flowing from the melting region can be controlled in temperature by supply of the supplementary heat before its introduction into the forehearth. This arrangement is quite advantageous in assuring proper and stable temperature of the glass output from the melting region upon its introduction into the forehearth for use in production.

As hereinabove described, production at times is required to be curtailed, usually for economic reasons, and the downtime can continue for extended periods such as a matter of weeks or even months. Whereas it has been a practice to maintain such furnaces in a heated condition under low power supplied from electrodes 20, because of the high cost of drainage and restart of an empty furnace, it is more desirable to shut down the furnace with a full load of glass contained therein. Such shutdown of the furnace, however, has a disadvantage in that certain regions of the furnace, such as the submerged throat, when loaded with solidified glass is extremely difficult or practically impossible to melt by conventional means for reinitiation of the flow of glass output.

According to the present invention, one or more auxiliary or supplementary electrodes are specially inserted or permanently provided in the difficult to reach regions, such as the submerged throat 15. In the arrangement illustrated, a series of electrodes 35a, 35b, 35c, 35d and 35e are provided in spaced relation within the throat 15 between the main power supply electrodes 30 and 40 located at the entry and exit ends of the throat respectively. In normal operation of the furnace, glass flows from the melting region 11 into the recessed channel or slot 12 and upon passage through the throat 15 to the riser 16 and forehearth 17, it is controlled in temperature by supply of additional heat by Joule effect current flow between the electrodes 30 and 40. The power of electrodes 30 and 40 is supplied from transformer 50 which has a primary 51 and a secondary 52 connected to the electrodes 30 and 40. However, when the furnace is shut down and the glass is allowed to solidify in the melting region 11 and the throat 15 these electrodes are ineffective to melt the solidified glass because of the non-conductivity of the glass in its solidified condition.

When glass in a furnace is allowed to solidify or otherwise approach solidity in an area such as the melting region, it can ordinarily be remelted such as with a combustion burner to melt the desired solidified regions. In the case of an electric furnace 10, the glass surface in the regions of the electrodes can be selectively melted to establish a conductive path between electrodes 20 of opposite potential and, thereafter, melting can continue by application of power to the electrodes to promote the flow of Joule effect current and thus progressively reestablish a molten pool.

Solidified glass in the throat 15 of the furnace, however, cannot be so reached with a combustion burner and, accordingly, reestablishment of flow through the throat by such means is usually practically impossible. Although the glass about the electrode 30 might be melted, no conductive path is provided through the throat because of the non-conductive solidified glass therein between the electrodes 30 and 40. Thus, where electrodes 35a to 35e are not permanently in place, a series of such electrodes can be installed by drilling through the refractory underlying the throat 15 for insertion of as many electrodes 35 as are necessary for progressive melting of the glass between the electrode 30 to the electrode 40.

More specifically, molten glass of the melting region is present about the electrode 30 after conventional heating of the glass in the melting region 11. The molten glass about the electrode 30 then allows establishment of an electrically conductive path between it and the adjacent electrode 35a. Thus, when the power output of the transformer 50 is applied between electrode 30 and 35a, glass can be melted between these two electrodes. In addition, glass can be melted in the region about the electrode 35a in sufficient amount to permit establishment of a conductive path between electrodes 35a and 35b. The secondary lead 56 of the transformer 50 can then be removed from the electrode 35a and connected in turn to electrode 35b to establish a Joule effect conductive path between the electrodes 30 and 35b. The glass about the electrode 35b can thereupon be melted to permit subsequent flow of current between 35b and 35c by connection of the transformer lead 56 to electrode 35c by connection of the transformer lead 56 to electrode 35c. The solidified glass in the throat 15 can thus be progressively melted by successive connection of the transformer secondary lead 56 to each of the electrodes 35a to 35e, one at a time until a complete conductive path of molten glass is established between electrodes 30 and 40, whereupon conventional heating of the throat glass can be resorted to by steady supply of power thereto.

As a variation of this procedure, a voltage can be established between electrodes 30 and 40 to maintain a potential difference therebetween during the sequential application of voltage in advancing relation from electrode 30 to 35a, 35b, etc., by moving the jumper 56 of secondary 52 of the transformer 50 to each succeeding electrode as the melt is advanced through the throat. Thus, the voltage between electrodes 30 and 40 will take over as soon as the mass of glass in the throat is sufficiently conductive to effect a generation of heat.

As still another variation of the described arrangements, the electrodes 35a to 35e can be permanently installed with a sequencing circuit designed to both provide heat when necessary during operation of the furnace and to automatically advance application of power to the melt in the throat from a cold start without need for manually connecting jumpers from one electrode to another as the glass is melted therein. In addition, electrodes in the throat may be grouped and sequenced or might be aligned with different spacing in staggered relation through the throat.

Thus, while certain arrangements of the present invention have been described, it will be apparent to those skilled in the art that various changes and modifications may be made therein without departing from the spirit and scope of the invention as claimed.

### Industrial Applicability

The present invention pertains to glass melting furnaces. This invention overcomes the problem of having to completely drain a glass melting furnace prior to shutdown conditions.

### Claims

1. A method of melting solidified glass in a submerged throat (15) of a glass melting furnace (10) comprising providing at least a first electrode (30) in the melter chamber supply slot (12), providing a second electrode (35a) in the covered submerged throat and subsequent electrodes (35b—35e) adjacent said second electrode along the length of the covered submerged throat, thus forming a series of electrodes, the spacing of the electrodes in the series being such that when power is applied between any two adjacent electrodes when molten material exists about one of the electrodes a Joule effect conductive path is provided upon power supply to the electrode in the series adjacent to the electrode about which molten material exists, heating glass about said first electrode (30) to a conductive condition around said first electrode and supplying electric energy between said first electrode and said second electrode (35a) to establish a Joule effect conductive path therebetween to more fully melt the glass therebetween and then supplying electric energy between said first electrode and sequentially to any subsequent electrode along said submerged throat to sequentially thaw the solidified glass by conduction of heat from the region between the first electrode and the second electrode and sequentially any subsequent electrode until the glass around the next subsequent electrodes becomes conductive and electric power for Joule effect heating can be applied to the next subsequent electrodes in the submerged throat until all of the glass in the submerged throat is molten.

2. The method of claim 1 wherein adequate electric energy is supplied to said first electrode and said second electrode to melt the glass about said second electrode and between said second electrode and the next subsequent electrode.

3. The method of claim 2 wherein the next subsequent electrode is a third electrode (35b) in said submerged throat which is within electrically conductive reach of said second electrode and electrical energy between said first and said third electrode is supplied to melt glass in said submerged throat beyond said second electrode.

4. The method of claim 2 wherein the subsequent electrodes are a series of electrodes in spaced relation extending along the submerged throat including said second electrode (35a) and said series of electrodes are energized in sequence beginning with said first electrode (30) as an entry electrode to the region located in the channel of the melter section and ending with a last electrode as an exit electrode (40) outside the submerged throat in the riser section (16) to progressively melt glass about each such electrode thereby to progressively advance the conductive path between adjacent electrodes in the series until a conductive path is established between said entry or first electrode (30) and exit or last electrode (40) for establishment of a glass flow path through said submerged throat.

5. An electrode arrangement for melting solidified glass in a submerged outlet throat (15) of a glass melting furnace (10) comprising spaced apart electrodes including a first electrode (30) at the entry to the throat, a second electrode (35a) in the covered submerged throat, one or more subsequent electrodes (35b—35e) adjacent said second electrode, and a last electrode (40) at the exit of the throat, means (20) for melting glass around said first electrode to provide molten glass between said first electrode and said second electrode, electric energy means (50) for establishing a Joule effect current therebetween for melting glass about said second electrode to provide molten glass for establishment of a conductive path between said second electrode and its next adjacent electrode, and means (50) for applying energy between said first electrode and each of said subsequent electrodes and last electrode sequentially until said means supply electric power between said first electrode and said last electrode, to complete a molten glass conductive path through the submerged throat (15) between said first electrode and said last electrode.

## Patentansprüche

1. Verfahren zum Schmelzen von erstarrtem Glas in einer eingetauchten Engstelle (15) eines Glasschmelzofens (10), enthaltend: Anordnen wenigstens einer ersten Elektrode (30) in dem Schmelzkammerzuführschlitz (12), Anordnen einer zweiten Elektrode (35a) in der bedeckten, eingetauchten Engstelle und anschließender Elektroden (35b bis 35e) benachbart zur genannten zweiten Elektrode längs der Länge der bedeckten, eingetauchten Engstelle, dadurch eine Reihe von Elektroden bildend, wobei der Abstand der Elektroden in der Reihe derart ist, daß, wenn zwischen jeweils zwei benachbarten Elektroden Spannung angelegt wird, wenn geschmolzenes Material um eine der Elektroden vorhanden ist, ein leitfähiger Joule-Effektpfad bei Zuführung von Spannung zu der Elektrode in der Serie benachbart zu der Elektrode eingerichtet wird, ukm die geschmolzenes Material vorhanden ist, Erwärmen des Glases um die genannte erste Elektrode (30) in einen leitfähigen Zustand um die genannte erste Elektrode und Zuführen elektrischer Energie zwischen die genannte erste Elektrode und die genannte zweite Elektrode (35a), um einen leitfähigen Joule-Effektpfad dazwischen auszubilden, um das Glas dazwischen vollständiger zu schmelzen, und anschließend Zuführen elektrischer Energie zwischen die genannte erste Elektrode und nacheinander zu allen nachfolgenden Elektroden längs der eingetauchten Engstelle, um nacheinander das erstarrte Glas durch Wärmeleitung aus dem Bereich zwischen der ersten Elektrode und der zweiten Elektrode und anschließend jeder nachfolgenden Elektrode zu schmelzen, bis das Glas um die nächstnachfolgenden Elektroden leitfähig wird und elektrische Energie für die Joule-Effekterwärmung zu den nächstnachfolgenden Elektroden in der eingetauchten Engstelle zugeführt werden kann, bis sämtliches Glas in der eingetauchten Engstelle geschmolzen ist.

2. Verfahren nach Anspruch 1, bei welchem geeignete elektrische Energie der ersten Elektrode und der zweiten Elektrode zugeführt wird, um das Glas um die genannte zweite Elektrode und zwischen der zweiten Elektrode in der nächstfolgenden Elektrode zu schmelzen.

3. Verfahren nach Anspruch 2, bei dem die nächstfolgende Elektrode eine dritte Elektrode (35b) in der eingetauchten Engstelle ist, die in elektrisch leitfähiger Reichweite der zweiten Elektrode ist, und daß elektrische Energie zwischen die erste und die dritte Elektrode zugeführt wird, um Glas in der eingetauchten Engstelle jenseits der zweiten Elektrode zu schmelzen.

4. Verfahren nach Anspruch 2, bei dem die nachfolgenden Elektroden eine Reihe von Elektroden sind, die sich im Abstand längs der eingetauchten Engstelle mit der zweiten Elektrode (35a) erstrecken, und daß die Reihe von Elektroden nacheinander mit Energie versorgt wird, beginnend mit der genannten ersten Elektrode (30) als eine Eintrittselektrode bis zu dem Bereich, der in dem Kanal des Schmelzabschnitts gelegen ist, und endend an der letzten Elektrode als eine Austrittselektrode (40) außerhalb der eingetauchten Engstelle in dem Steigerabschnitt (16), um Glas um jede solche Elektrode progressiv zu schmelzen, um dadurch progressiv den leitfähigen Pfad zwischen benachbarten Elektroden in der Reihe vorzuschieben, bis ein leitfähiger Pfad zwischen der Eintritts- oder ersten Elektrode (30) und der Austritts- oder letzten Elektrode (40) eingerichtet ist, um einen Glasströmungsweg durch die eingetauchte Engstelle einzurichten.

5. Elektrodenanordnung zum Schmelzen erstarrten Glases in einer eingetauchten Auslaßengstelle (15) eines Glasschmelzofens (10), enthaltend im Abstand zueinander angeordnete Elektroden, mit einer ersten Elektrode (30) am Eingang der Engstelle, einer zweiten Elektrode (35a) in der abgedeckten, eingetauchten Engstelle, eine oder mehrere nachfolgende Elektroden (35b bis 35e) benachbart der zweiten Elektrode und eine letzte Elektrode (40) am Ausgang der egstelle, eine Einrichtung (20) zum Schmelzen von Glas um die erste Elektrode, um geschmolzenes Glas zwischen der ersten Elektrode und der zweiten Elektrode zu bilden, eine Stromversorgungseinrichtung (50) zur Einrichtung eines Joule-Effektstromes dazwischen, um Glas um die genannte zweite Elektrode zu schmelzen, um geschmolzenes Glas zur Einrichtung eines leitfähigen Pfades zwischen der zweiten Elektrode und ihrer nächstbenachbarten Elektrode zu bilden, und eine Einrichtung (50) zur Zuführung von Energie zwischen die erste Elektrode und jeder der nachfolgenden Elektroden und der letzten Elektrode nacheinander, bis die genannte Einrichtung elektrische Energie zwischen die erste Elektrode und die letzte Elektrode zuführt, um einen leitfähigen Pfad geschmolzenen Glases durch die eingetauchte Engstelle (15) zwischen der ersten Elektrode und der letzten Elektrode zu vervollständigen.

**Revendications**

1. Méthode de fusion de verre solidifié dans un gueulard immergé (15) d'un four de verrerie (10), comportant les étapes qui consistent à prévoir au moins une première électrode (30) dans la rainure d'alimentation de chambre de fusion (12), à prévoir une seconde électrode (35a) dans le gueulard immergé couvert et des électrodes subséquentes (35b—35e) à proximité de ladite seconde électrode sur toute la longueur du gueulard immergé couvert, pour former ainsi une série d'électrodes, l'espacement des électrodes de la série étant tel que lorsque, lors d'une fourniture de courant, un courant est appliqué entre deux électrodes voisines quelconques, en présence de matière fondue autour de l'une des électrodes, un trajet conducteur à effet Joule est établi jusqu'à l'électrode de la série, voisine de l'électrode autour de laquelle de la matière fondue est présente, à chauffer du verre présent autour de ladite première électrode (30) pour qu'il atteigne un état conducteur autour de celle-ci, et à fournir une énergie électrique entre ladite première électrode et ladite seconde électrode (35a) pour etablir un trajet conducteur à effet Joule entre celles-ci, afin de faire fondre plus complètement le verre présent entre elles, et puis à fournir une énergie électrique entre ladite première électrode et toutes les électrodes subséquentes le long dudit gueulard immergé, en séquence, pour faire fondre séquentiellement le verre solidifié par une conduction de chaleur à partir de la zone située entre la première électrode et la seconde électrode et, séquentiellement, toutes les électrodes subséquentes, jusqu'à ce que le verre présent autour des électrodes subséquentes suivantes devienne conducteur et qu'un courant électrique en vue d'un chauffage par effet Joule puisse être appliqué aux électrodes subséquentes suivantes dans le gueulard immergé, jusqu'à ce que la totalité du verre présent dans ce dernier soit fondue.

2. Méthode de la revendication 1, dans laquelle une énergie électrique appropriée est fournie à ladite première électrode et à ladite seconde électrode pour faire fondre le verre qui se trouve autour de ladite seconde électrode et entre ladite seconde électrode et l'électrode subséquente suivante.

3. Méthode de la revendication 2, dans laquelle l'électrode subséquente suivante est une troisième électrode (35b) située dans ledit gueulard immergé, à portée de conduction électrique de ladite seconde électrode, et une énergie électrique existant entre ladite première et ladite seconde électrode est fournie pour faire fondre du verre présent dans ledit gueulard immergé, au-delà de ladite seconde électrode.

4. Méthode de la revendication 2, dans laquelle les électrodes subséquentes constituent une série d'électrodes qui s'étendent, dans une relation espacée, le long du gueulard immergé comportant ladite seconde électrode (35a), et ladite série d'électrodes est excitée séquentiellement, en commençant par ladite première électrode (30) qui constitue une électrode d'entrée dans la zone située dans le lit de coulée de la section de fusion et en terminant par une dernière électrode qui constitue une électrode de sortie (40) à l'extérieur du gueulard immergé, dans la section de colonne montante (16), afin de faire fondre progressivement du verre présent autour de chacune de ces électrodes pour ainsi faire avancer progressivement le trajet conducteur entre des électrodes voisines de la série, jusqu'à ce qu'un trajet conducteur soit établi entre ladite électrode d'entrée ou première électrode (30) et ladite électrode de sortie ou dernière électrode (40), en vue d'établir un écoulement de verre à travers ledit gueulard immergé.

5. Dispositif d'électrodes pour faire fondre du verre solidifié dans un gueulard de sortie immergé (15) d'un four de·verrerie (10), comportant des électrodes espacées les unes des autres

**0 157 767**

comprenant une première électrode (30) située à l'entrée du gueulard, une seconde électrode (35a) située dans le gueulard immergé couvert, une ou plusieurs électrodes subséquentes (35b—35e), voisines de ladite seconde électrode, et une dernière électrode (40) située à la sortie du gueulard, des moyens (20) destinés à faire fondre du verre présent autour de ladite première électrode, afin de former du verre fondu autour de ladite première électrode et de ladite seconde électrode, des moyens d'énergie électrique (50) destinés à établir un courant à effet Joule entre celles-ci, afin de faire fondre du verre présent autour de ladite seconde électrode pour former du verre fondu, en vue d'établir un trajet conducteur entre ladite seconde électrode et son électrode voisine suivante, et des moyens (50) destinés à appliquer une énergie entre ladite première électrode et chacune desdites électrodes subséquentes et de ladite dernière électrode, séquentiellement, jusqu'à ce que lesdits moyens fournissent un courant électrique entre ladite première électrode et ladite dernière électrode, afin d'établir entre elles un trajet conducteur de verre fondu à travers le gueulard immergé (15).

FIG. 1

FIG. 2

FIG. 3